# EUROPÄISCHE PATENTSCHRIFT

(11) **EP 1 489 385 B1**
(45) Veröffentlichungstag und Bekanntmachung des Hinweises auf die Patenterteilung: **20.07.2016**
(21) Anmeldenummer: 04010980.3
(22) Anmeldetag: 08.05.2004
(51) Int. Cl.: G01D 5/14, F16D 48/02, F16D 25/08, F15B 15/28

(54) **Vorrichtung zur Sensierung der axialen Stellung eines ersten Bauteils, das relativ zu einem zweiten Bauteil bewegbar ist**
Device for detecting the axial position of a first part which is moveable relative to a second part
Dispositif pour détecter la position axiale d'un premier corps se deplaçant relativement à un second corps

(30) Priorität: 11.06.2003 DE 10326638
(43) Veröffentlichungstag der Anmeldung: 22.12.2004
(73) Patentinhaber: FTE automotive GmbH, 96106 Ebern (DE)
(72) Erfinder: Wöhner, Steffen, 96524 Gefell (DE)
(74) Vertreter: Oppermann, Mark

(56) Entgegenhaltungen:
- DE-A1- 3 738 151
- DE-T2- 69 409 807
- DE-U1- 20 003 631

## Beschreibung

### TECHNISCHES GEBIET

Die Erfindung bezieht sich auf eine Vorrichtung zur Sensierung der axialen Stellung eines von zwei relativ zueinander bewegbaren Bauteilen bezüglich des anderen Bauteils. Insbesondere bezieht sich die Erfindung auf eine Vorrichtung zur Sensierung der axialen Stellung eines Kolbens bezüglich eines Zylindergehäuses eines Geber- oder Nehmerzylinders für eine hydraulische Kupplungsbetätigung für Kraftfahrzeuge, wie sie massenweise in der Automobilindustrie zum Einsatz kommen.

### STAND DER TECHNIK

Eine herkömmliche hydraulische Kupplungsbetätigung für Kraftfahrzeuge hat einen an einen mit Hydraulikflüssigkeit gefüllten Ausgleichsbehälter angeschlossenen Geberzylinder, der beispielsweise über ein Kupplungspedal oder einen elektromotorischen Antrieb betätigt werden kann. Der Geberzylinder ist über eine Druckleitung mit einem Nehmerzylinder hydraulisch verbunden, so daß der durch Niedertreten des Kupplungspedals oder elektromotorische Verschiebung des Geberzylinderkolbens im Geberzylinder erzeugte Druck über die Flüssigkeitssäule in der Druckleitung auf den Nehmerzylinder übertragbar ist. Im Ergebnis wird das Ausrücklager der Kupplung über den Nehmerzylinderkolben mit einer Betätigungskraft beaufschlagt, um über einen Ausrückmechanismus die Kupplungsdruckplatte von der Kupplungsmitnehmerscheibe und somit den Motor vom Getriebe des Kraftfahrzeugs zu trennen. Auch sind hydraulische Kupplungsbetätigungen bekannt, bei denen der Ausrückmechanismus der Kupplung von einem damit wirkverbundenen Stell- oder Nehmerzylinder betätigt werden kann, der seinerseits über einen hydraulischen Servokreis angesteuert wird.

Bei derartigen hydraulischen Kupplungsbetätigungen für Kraftfahrzeuge wurde im Stand der Technik bereits vorgeschlagen, mittels geeigneter mechanischer, elektrischer oder magnetischer Einrichtungen die Stellung des Kolbens des Geber- oder Nehmerzylinders zu sensieren (z.B. US 4,705,151, DE 41 20 643 A1), um mittelbar auf die Stellung der Kupplungsdruckplatte zurückzuschließen. Eine solche Sensierung ermöglicht zum einen eine Aussage über den Verschleißzustand der Kupplung. Zum anderen kann der Ein- bzw. Ausrückzustand der Kupplung ermittelt werden, so daß z.B. bei automatisierten Reibungskupplungen die Kupplungsbetätigung im gewünschten Maße automatisch gesteuert werden kann. Die Ergebnisse der Sensierung können schließlich auch für Sicherheitsvorkehrungen im Betrieb des Kraftfahrzeugs verwendet werden, beispielsweise dafür, daß das Kraftfahrzeug nur dann gestartet werden kann, wenn das Kupplungspedal niedergetreten wird.

In diesem Zusammenhang offenbart die DE 199 15 832 A1 einen Geberzylinder, der einen längsverschieblich in einem Gehäuse angeordneten Kolben aufweist. Am Kolben ist eine Ringnut ausgebildet, die zur Aufnahme eines Ringmagneten dient. Auf dem Gehäuse des Geberzylinders sitzt ein Aufnahmeteil, in dem zwei Hallschalter, eine zugehörige Auswerteelektronik sowie ein Anschlußkontaktteil angeordnet sind. Mittels der Hallschalter wird durch die Wandung des Zylindergehäuses hindurch die Stellung des Ringmagneten und damit die Stellung des Kolbens erfaßt, worauf das entsprechende Schaltsignal durch die Auswerteelektronik aufbereitet und sodann über das Anschlußkontaktteil zur weiteren Verarbeitung nach außen abgegeben wird.

Der dort beschriebene, einen Ringmagneten und zwei Hallschalter umfassende Stellungsgeber ist allerdings nur in der Lage, die jeweiligen Endstellungen des Kolbens zu erfassen. Zwischenstellungen oder der Weg des Kolbens indes können nicht erfaßt werden, was aber erforderlich ist, wenn etwa eine exakte Aussage über den Verschleißzustand der Kupplung getroffen werden oder eine automatische Steuerung der Aus- bzw. Einrückbewegung erfolgen soll.

Entsprechendes gilt für den aus der DE 100 53 995 A1 bekannten Stellungsgeber an einem Tandem-Hauptzylinder eines Kraftfahrzeug-Bremssystems, der ein gehäuseseitiges Hallelement aufweist, das mit einem kolbenseitigen magnetischen Metallstift zusammenwirkt, um bei einer bestimmten Kolbenstellung ein Signal etwa zur Ansteuerung eines Bremslichts abzugeben; außerdem den in der DE 41 16 651 C2 beschriebenen Arbeitszylinder, der ein Zylinderrohr aufweist, in dem ein mit einem Dauermagnet versehener Kolben verschiebbar angeordnet ist, und einen mittels einer Befestigungseinrichtung im Bereich des Außenumfangs des Zylinderrohrs angeordneten, durch das Magnetfeld des Dauermagneten berührungslos betätigbaren Sensor hat, bei welchem Arbeitszylinder der Sensor mit Abstand zum Außenumfang des Zylinderrohrs angeordnet ist, wobei zwischen dem Sensor und dem Zylinderrohr eine zumindest einen Teil des Magnetfelds des Dauermagneten zum Sensor leitende Magnetfeld-Leiteinrichtung vorgesehen ist.

Weiterhin offenbart die DE 197 38 316 A1 eine Vorrichtung zur berührungslosen Messung des Verschleißes des Bremsklotzes an Scheibenbremsen. Bei dieser ist die Rückplatte des Bremsklotzes durch ein Verbindungsglied mit einer Meßstange eines Wegsensors gekoppelt, die mit einem Stabmagneten fest verbunden ist. Die Stellung des Stabmagneten wird durch ein Hall-Element berührungslos abgetastet. Zur Verbessung der Empfindlichkeit des Stabmagneten ist mindestens ein Polschuh vorgesehen, in den das Hall-Element eingefügt ist. Diese Vorrichtung ist allerdings für einen Einsatz an einer herkömmlichen Kolben-Zylinder-Anordnung nur sehr bedingt geeignet, insbesondere weil eine Verdrehung des radial magnetisierten Stabmagneten gegenüber dem Hall-Element verhindert werden muß, was in der Regel eine im Verhältnis hohe Reibung bedingt.

Ferner ist aus dem Fachartikel "Berührungslose, verschleißfreie Wegsensoren in Kupplungs- und Bremssystemen" von Houben, Hans; Marto, Arno; Wagner, Klaus; Gebert, Stefan und Wöhner, Steffen in ATZ 12/2002, Jahrgang 104, Seiten 1076 bis 1081, eine Sensorvorrichtung für insbesondere Kupplungszylinder bekannt, die einen am Zylindergehäuse angeordneten magnetflußempfindlichen Sensor in Form eines Hallsensors aufweist, welcher mit einem am Kolben angeordneten magnetischen Signalelement in Form eines stabförmigen Permanentmagneten zusammenwirkt, um die axiale Relativstellung des Permanentmagneten zum Hallsensor und somit die des Kolbens zum Zylindergehäuse zu erfassen.

Zwar ist die dort offenbarte Sensorvorrichtung in der Lage, beliebige Stellungen des Kolbens bezüglich des Zylindergehäuses oder den Weg des Kolbens zu erfassen. Hierfür ist gemäß diesem Stand der Technik jedoch ein langer Stabmagnet vorzusehen, der sich über den gesamten zu erfassenden Bereich von axialen Relativstellungen des Kolbens zum Zylindergehäuse durch den Kolben hindurch erstreckt. Dies erfordert einen im Verhältnis großen axialen Bauraum im Kolben zur Unterbringung des Stabmagneten, was auch zu einer unerwünschten Vergrößerung der Gesamtlänge des Zylinders führen kann. Hinzu kommt hier, daß der mechanischen Stabilität des Stabmagneten besondere Beachtung zu schenken ist, damit dieser z.B. bei der Montage des Stabmagneten im Kolben nicht zerbricht. Schon insofern darf der Stabmagnet nicht zu dünn ausgebildet werden. Eine dickere Ausgestaltung des Stabmagneten hingegen vergrößert in unerwünschter Weise den radialen Bauraum zur Unterbringung des Stabmagneten im Kolben, ganz zu schweigen von den damit verbundenen höheren Kosten für den Stabmagneten, die angesichts des massenhaften Einsatzes derartiger Sensorvorrichtungen ebenfalls unerwünscht sind.

Ferner offenbart die DE 694 09 807 T2 noch einen magnetischen Detektor eines auf eine Bewegung zurückgehenden Abstands, mit einem entlang einer Bahn bewegbaren Magneten, einem magnetischen Körper und einem auf dem magnetischen Körper angeordneten magnetisch sensitiven Element, wobei der magnetische Körper einen Bereich aufweist, der sich entlang der Bahn erstreckt und sich gegenüber dem Magneten befindet. Bei einem in der DE 694 09 807 T2 beschriebenen Ausführungsbeispiel des magnetischen Detektors (Fig. 13 und 14), bei dem ein Magneto-Resistor mittig an einem im Querschnitt kreisrunden magnetischen Körper angebracht ist, der sich über einen Teilbereich des Bewegungsbereichs des bewegbaren Magneten erstreckt, ergibt sich ein im wesentlichen linearer Verlauf der Ausgangsspannung des Magneto-Resistors über dem Weg des Magneten, wie es für eine eindeutige Wegerfassung im Grunde erwünscht ist. Dieser magnetische Detektor weist jedoch nur eine geringe Signalausbeute auf, d.h. die Ausgangsspannung des Magneto-Resistors verläuft hier nur mit einer sehr geringen Steigung über dem Weg des Magneten, weshalb sich bei diesem Stand der Technik die Signalauswertung zur exakten Bestimmung des jeweils zurückgelegten Wegs zumindest schwierig gestaltet. Darüber hinaus weist bei diesem Stand der Technik der magnetische Körper, der in anderen, bevorzugten Ausführungsbeispielen auch die Form einer kegelstumpfartigen Pyramide haben kann, eine im Verhältnis große Masse auf, die bei bestimmten Anwendungen unerwünscht ist.

Weiterhin ist aus der DE 200 03 631 U1 eine Vorrichtung zur Sensierung der axialen Stellung eines Kolbens bezüglich eines Zylinderrohrs einer Kolben-Zylindereinheit bekannt, mit einem an dem Kolben angeordneten Permanentmagneten und mindestens einem an dem Zylinderrohr angeordneten magnetflussempfindlichen Sensor, mittels dessen die axiale Relativstellung des Permanentmagneten zum Sensor erfassbar ist. Darüber hinaus ist gemäß diesem Stand der Technik jedem Sensor wenigstens eine bezüglich des Sensors ortsfeste Flussleiteinrichtung zugeordnet, welche sich an dem Zylinderrohr mindestens über den zu erfassenden Bereich von axialen Relativstellungen des Permanentmagneten zum Sensor erstreckt, wobei der Sensor an einem der Längsenden der Flussleiteinrichtung außerhalb des zu erfassenden Bereichs von axialen Relativstellungen des Permanentmagneten zum Sensor angeordnet ist. Diese Vorrichtung besitzt einen stets "geschlossenen" Magnetkreis mit radial magnetisiertem Ringmagneten, der zwingend zwei bezüglich des Ringmagneten gegenüberliegend angeordnete Flussleiteinrichtungen erfordert, was für bestimmte Anwendungen (Kupplungsgeber- oder -nehmerzylinder) im Hinblick auf Bauraumbedarf, Gewicht und Kosten unerwünscht ist.

Schließlich offenbart die DE 37 38 151 A1 einen Kolbenpositionsdetektor für Druckmittelzylinder aus einem nichtmagnetischen Material, in dem ein passender Kolben beweglich aufgenommen ist, an dem ein Permanentmagnet befestigt ist. An einer bestimmten Position des Zylinders ist ein magnetisches Detektorelement angeordnet, das auf das vom Permanentmagneten erzeugte magnetische Feld anspricht und Detektorsignale erzeugt. Zwischen dem Zylinder und dem magnetischen Detektorelement ist ein blattförmiges magnetisches Induktionsteil angeordnet, so dass, wenn der Permanentmagnet dem magnetischen Detektorelement gegenübersteht, das magnetische Induktionsteil durch eine Nebenschlussinduktion eines Teils des auf den Permanentmagneten wirkenden Magnetflusses magnetisch gesättigt ist. Wenn der Permanentmagnet aus dieser Position gegenüber dem magnetischen Detektorelement verschoben worden ist, wird der Anteil des Magnetflusses, der durch das magnetische Induktionsteil einer Nebenschlussinduktion ausgesetzt ist, erhöht und die Magnetflussdichte, die auf das magnetische Detektorelement wirkt, wird schnell abgesenkt, wodurch die Kolbenposition mit hoher Genauigkeit detektiert werden kann. Eine Huberfassung des Kolbens sieht dieser Stand der Technik indes nicht vor.

### DARSTELLUNG DER ERFINDUNG

Der Erfindung liegt die Aufgabe zugrunde, eine möglichst einfach aufgebaute Vorrichtung zur Sensierung der axialen Stellung eines von zwei relativ zueinander bewegbaren Bauteilen bezüglich des anderen Bauteils, insbesondere eines Kolbens bezüglich eines Zylindergehäuses eines Geber- oder Nehmerzylinders für eine hydraulische Kupplungsbetätigung für Kraftfahrzeuge zu schaffen, mittels welcher Vorrichtung bei möglichst geringem Bauraumbedarf für die Vorrichtung beliebige axiale Relativstellungen zwischen den beteiligten Bauteilen bzw. deren Relativweg zuverlässig erfasst werden können/kann.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 6.

Erfindungsgemäß umfasst eine Vorrichtung zur Sensierung der axialen Stellung eines von zwei relativ zueinander bewegbaren Bauteilen bezüglich des anderen Bauteils, insbesondere eines Kolbens bezüglich eines Zylindergehäuses eines Geber- oder Nehmerzylinders für eine hydraulische Kupplungsbetätigung für Kraftfahrzeuge, ein an dem einen Bauteil angeordnetes magnetisches Signalelement, bei dem es sich um einen Permanentmagneten, nämlich einen Ringmagneten handelt, der in axialer Richtung magnetisiert ist, und mindestens einen an dem anderen Bauteil angeordneten magnetflussempfindlichen Sensor, mittels dessen die axiale Relativstellung des Ringmagneten zum Sensor erfassbar ist, wobei dem Sensor nur ein bezüglich des Sensors ortsfestes Flussleitelement zugeordnet ist, welches sich auf nur einer Seite des einen Bauteils an dem anderen Bauteil mindestens über den zu erfassenden Bereich von axialen Relativstellungen des Ringmagneten zum Sensor erstreckt und aus einem Blechabschnitt aus einem geeignet magnetisierbaren Material, wie einem Dynamoblechabschnitt besteht, wobei der Sensor an einem der Längsenden des Flussleitelements außerhalb des zu erfassenden Bereichs von axialen Relativstellungen des Ringmagneten zum Sensor angeordnet ist, so dass die mittels des Sensors erfasste magnetische Flussdichte stetig steigt um so näher der Ringmagnet dem Sensor kommt und stetig fällt um so weiter sich der Ringmagnet vom Sensor entfernt, und wobei der Sensor auf einer Längsfläche des Flussleitelements aufliegt oder das Flussleitelement in Längsrichtung in zwei Abschnitte unterteilt ist, zwischen denen der Sensor am Flussleitelement anliegend eingefügt ist.

Das dem magnetflußempfindlichen Sensor zugeordnete, bezüglich des magnetflußempfindlichen Sensors unbewegliche Flußleitelement der erfindungsgemäßen Sensorvorrichtung dient quasi der Bündelung der Feldlinien des Magnetfelds des magnetischen Signalelements, so daß sich im Verhältnis hohe Feldstärken H im Flußleitelement ergeben. Mit anderen Worten gesagt kommt es im Flußleitelement zu einer Konzentration des magnetischen Flusses Φ, dessen Dichte, d.h. die magnetische Flußdichte B mittels des magnetflußempfindlichen Sensors sensiert werden kann. Um so näher das magnetische Signalelement bei einer Bewegung entlang des Flußleitelements einem Meßpunkt am Flußleitelement kommt, an dem die magnetische Flußdichte B im Flußleitelement mittels des magnetflußempfindlichen Sensors sensiert wird, um so höher ist die sensierte magnetische Flußdichte B.

Kommt etwa ein Hallsensor mit einem Hallelement aus z.B. Silizium als magnetflußempfindlicher Sensor zum Einsatz, was bevorzugt ist, weil die zugehörige Auswerteelektronik in der Halbleiterfertigung auf einfache und somit kostengünstige Weise mit integriert werden kann, kommt es infolge des durch das Flußleitelement gebündelten Magnetfelds des magnetischen Signalelements an dem von einem elektrischen Strom durchflossenen Hallelement zu einer Ablenkung der Ladungsträger im Hallelement. Durch diese Verschiebung der Ladungsträger im Hallelement entstehen Potentialunterschiede an dem Stromverlauf durch das Hallelement parallelen Elektroden, an denen diese Potentialunterschiede als Quer- oder Hallspannung U_{H} abgegriffen werden können. Diese Hallspannung U_{H} ist bei konstanter Stromstärke I des das Hallelement durchfließenden Stroms direkt proportional zur magnetischen Flußdichte B im Flußleitelement.

Aus den obigen Ausführungen ergibt sich, daß bei der erfindungsgemäßen Sensorvorrichtung mittels des magnetflußempfindlichen Sensors die magnetische Flußdichte B im Flußleitelement sensiert werden kann, die wiederum ein Maß für den axialen Abstand zwischen dem magnetischen Signalelement und dem magnetflußempfindlichen Sensor darstellt, so daß die axialen Relativstellungen des magnetischen Signalelements zum magnetflußempfindlichen Sensor kontinuierlich erfaßt werden können oder, mit anderen Worten gesagt, hier eine Erfassung des Relativwegs möglich ist, und das mit nur wenigen Bauteilen. Dabei gestattet die erfindungsgemäße Ausgestaltung der Sensorvorrichtung die Verwendung eines im Vergleich zum gattungsbildenden Stand der Technik kleinen Magneten, der eine nur sehr kurze axiale Baulänge aufweisen kann und sich nicht über den gesamten zu erfassenden Bereich von axialen Relativstellungen zwischen den beteiligten Bauteilen erstrecken muß. Die im eingangs geschilderten Stand der Technik vorgesehenen langen Stabmagneten sind im Ergebnis entbehrlich, so daß auch die damit verbundenen Nachteile vermieden werden können.

Der Umstand, daß sich bei der erfindungsgemäßen Sensorvorrichtung das Flußleitelement an dem anderen Bauteil mindestens über den zu erfassenden Bereich von axialen Relativstellungen des magnetischen Signalelements zum magnetflußempfindlichen Sensor erstreckt, ist hierbei dem Erhalt eindeutiger Sensorsignale förderlich. Dies deshalb, weil somit im Meßbereich der Sensorvorrichtung stets eine axiale Überdeckung von Signalelement und Flußleitelement gegeben ist, wodurch auf einfache Weise ein solcher Vorzeichenwechsel des erfaßten Magnetfelds verhindert wird, der auftreten würde, wenn sich das magnetische Signalelement im Meßbereich der Sensorvorrichtung relativ zum magnetflußempfindlichen Sensor in axialer Richtung über das Flußleitelement hinaus bewegen könnte. Andersherum ausgedrückt bestimmt bei der erfindungsgemäßen Sensorvorrichtung der gewünschte Meßbereich nicht mehr die Länge des Magneten, wie beim gattungsbildenden Stand der Technik, sondern die Länge des u.a. ungleich kostengünstigeren Flußleitelements. Dadurch erschließen sich der erfindungsgemäßen Sensorvorrichtung auch Anwendungsgebiete, die vorher meist aufwendigen spulengebundenen, d.h. induktiv arbeitenden Sensorvorrichtungen vorbehalten waren, wobei die erfindungsgemäße Ausbildung der Sensorvorrichtung induktiv arbeitenden Sensorvorrichtungen gegenüber den zusätzlichen Vorteil hat, daß axiale Relativbewegungen des Signalelements zum Sensor zuverlässig auch bei hohen Bewegungsgeschwindigkeiten erfaßt werden können.

Ein weiterer Vorteil der erfindungsgemäßen Sensorvorrichtung ist ferner darin zu sehen, daß diese im Gegensatz zu der oben geschilderten Sensorvorrichtung mit deren langen Stabmagneten auch zuverlässig arbeitend an Kolben-Zylinder-Anordnungen eingesetzt werden kann, deren Kolben bezüglich des Zylindergehäuses in Abhängigkeit von der axialen Kolbenstellung um einen bestimmten Winkelbetrag bezüglich der Längsachse des Zylindergehäuses verkippt, wie sie etwa in der DE 43 31 241 A1 der Anmelderin beschrieben werden.

Daraus, daß das Flußleitelement aus einem Blechabschnitt aus einem geeignet magnetisierbaren Material, wie einem ferromagnetischen Dynamoblechabschnitt besteht, ergeben sich noch weitere Vorteile: Neben Bauraum- und Gewichtsvorteilen, die ein Blechabschnitt, d.h. ein in Dickenrichtung gegenüber seiner Breiten- und Längenrichtung sehr viel kleinerer Materialabschnitt mit sich bringt, hat ein Blechabschnitt u.a. noch den Vorteil, daß er den jeweiligen Erfordernissen entsprechend leicht an die Geometrie der Bauteile angepaßt werden kann, deren Relativbewegung erfaßt werden soll. So kann etwa bei dem hier bevorzugten, wenngleich die Erfindung nicht einschränkenden Anwendungsgebiet der Erfindung, nämlich der Sensierung der axialen Stellung eines Kolbens bezüglich eines Zylindergehäuses eines Geber- oder Nehmerzylinders für eine hydraulische Kupplungsbetätigung für Kraftfahrzeuge, das Flußleitelement in einfacher Weise durch Biegen des Blechabschnitts der Krümmung des Zylindergehäuses oder des Kolbens angepaßt werden, was wiederum insbesondere dem Erhalt eines nur geringen Bauraumbedarfs für die Sensorvorrichtung förderlich ist.

Die endseitige Anordnung des magnetflußempfindlichen Sensors am Flußleitelement hat schließlich den Vorteil, daß der Verlauf des für die magnetische Flußdichte B im Flußleitelement und somit für die Relativbewegung des magnetischen Signalelements zum Flußleitelement repräsentativen Signals über dem Weg bei einer axialen Annäherung des magnetischen Signalelements an den magnetflußempfindlichen Sensor stetig steigt oder, wenn sich das magnetische Signalelement in axialer Richtung vom magnetflußempfindlichen Sensor entfernt, stetig fällt, so daß das Signal einfach auszuwerten ist. Bei etwa einer mittigen Anordnung des magnetflußempfindlichen Sensors bezüglich des Flußleitelements müßte bei der Auswertung des Signals auf geeignete Weise mit berücksichtigt werden, von welcher Seite sich das magnetische Signalelement dem magnetflußempfindlichen Sensor nähert bzw. nach welcher Seite sich das magnetische Signalelement vom magnetflußempfindlichen Sensor entfernt, was die Signalauswertung komplizierter machen würde.

Da es sich bei dem magnetischen Signalelement um einen Permanentmagneten, nämlich einen sehr kompakt bauenden Ringmagneten handelt, wird in vorteilhafter Weise keine Energiezufuhr zum Aufbau eines Magnetfelds benötigt.

Prinzipiell kann für den magnetflußempfindlichen Sensor jeder Sensor eingesetzt werden, der, wie der Name schon sagt, in der Lage ist, den Magnetfluß im Flußleitelement bzw. eine Änderung desselben zu erfassen. So könnten etwa auch magnetoresistive Sensoren eingesetzt werden. Bevorzugt wird jedoch der Einsatz von Hallsensoren, welche die oben schon angesprochenen Vorteile besitzen. Solche Hallsensoren sind heutzutage auch in programmierbarer Form relativ kostengünstig im Handel erhältlich. Programmierbare Hallsensoren können in vorteilhafter Weise den jeweiligen Erfordernissen entsprechend eine Linearisierung und/ oder eine Temperaturkompensation an einer Wegkennlinie durchführen, leicht an die verschiedensten Schnittstellen angepaßt werden, ja ggf. sogar eine Teaching-Funktion besitzen, so daß die Wegkennlinie z.B. hinsichtlich der Festlegung der Anfangs- und Endpunkte, der Steigung und der Verstärkung der Signale optimal an die jeweilige Applikation angepaßt werden kann.

Grundsätzlich ist es denkbar, daß sich das Flußleitelement beispielsweise in einer Richtung erstreckt, die mit der Richtung der axialen Relativbewegung des einen Bauteils bezüglich des anderen Bauteils einen vorbestimmten Winkel einschließt. Bevorzugt wird jedoch eine Ausgestaltung der erfindungsgemäßen Sensorvorrichtung, bei der sich das Flußleitelement im wesentlichen in Richtung der axialen Relativbewegung des einen Bauteils bezüglich des anderen Bauteils erstreckt, d.h. in Bewegungsrichtung liegt, weil dies zum einen den radialen Bauraumbedarf der Sensorvorrichtung minimiert. Zum anderen gestaltet sich bei einer solchen Ausbildung der Sensorvorrichtung die Auswertung des mittels des magnetflußempfindlichen Sensors erhaltenen, für die magnetische Flußdichte B im Flußleitelement repräsentativen Signals einfacher.

Wenn der magnetflußempfindliche Sensor an dem zugeordneten Flußleitelement anliegt, vorzugsweise flächig anliegt, steht ein sehr guter Pegel des für die Flußdichte B im Flußleitelement repräsentativen Signals zu erwarten.

Der magnetflußempfindliche Sensor liegt in einer ersten Alternative an einem der Längsenden des Flußleitelements auf einer Längsfläche des Flußleitelements auf.

In einer anderen Alternative der erfindungsgemäßen Sensorvorrichtung ist vorgesehen, daß das Flußleitelement in Längsrichtung in zwei Abschnitte unterteilt ist, zwischen denen der magnetflußempfindliche Sensor am Flußleitelement anliegend eingefügt ist, wodurch der magnetflußempfindliche Sensor vorteilhaft direkt in dem im Flußleitelement konzentrierten magnetischen Fluß liegt. Liegt der magnetflußempfindliche Sensor demgemäß im Hauptfluß bzw. im Bereich der höchsten Feldstärke im Flußleitelement, so ist dies dem Erhalt eines für die magnetische Flußdichte B im Flußleitelement repräsentativen Signals von hoher Signalstärke förderlich. Zweckmäßig können sich hierbei auch die zwei Abschnitte des Flußleitelements jeweils zum magnetflußempfindlichen Sensor hin verjüngen.

In einer bevorzugten Anwendung der erfindungsgemäßen Sensorvorrichtung kann der Ringmagnet an einem Kolben eines Geber- oder Nehmerzylinders für eine hydraulische Kupplungsbetätigung für Kraftfahrzeuge angebracht sein, wie es z.B. aus der DE 202 08 568 U1 der Anmelderin bekannt ist und sich bereits in der Serienfertigung bewährt hat, während der magnetflußempfindliche Sensor mit dem zugeordneten Flußleitelement an einem Zylindergehäuse des Geber- oder Nehmerzylinders angebracht ist. Prinzipiell könnte die Anordnung zwar auch umgekehrt getroffen sein, mit dem magnetischen Signalelement am Zylindergehäuse und dem magnetflußempfindlichen Sensor samt zugeordnetem Flußleitelement am Kolben. Letztere Anordnung aber könnte u.U. wieder zu Bauraumproblemen am Kolben führen. Außerdem wäre hier das Signal des magnetflußempfindlichen Sensors vom Kolben abzuführen und eine Stromversorgung zum magnetflußempfindlichen Sensor am Kolben zu gewährleisten, was eine im Grunde unerwünschte Leitungsführung zum Kolben als dem bewegten Bauteil erfordern würde.

Schließlich können bei dieser bevorzugten Anwendung der erfindungsgemäßen Sensorvorrichtung der magnetflußempfindliche Sensor und das zugeordnete Flußleitelement vorteilhaft in einem gemeinsamen Sensorgehäuse untergebracht sein, welches - wie es beispielsweise die DE 201 16 818 U1 der Anmelderin beschreibt - an vorbestimmter Stelle an dem Zylindergehäuse des Geber- oder Nehmerzylinders befestigt werden kann.

### KURZE BESCHREIBUNG DER ZEICHNUNGEN

Die Erfindung wird nachstehend anhand bevorzugter Ausführungsbeispiele unter Bezugnahme auf die beigefügten, teilweise schematischen Zeichnungen näher erläutert. Dabei zeigen:
- Fig. 1: eine abgebrochene Längsschnittansicht eines einen Kolben und ein Zylindergehäuse aufweisenden Geberzylinders für eine hydraulische Kupplungsbetätigung für Kraftfahrzeuge, an dem eine erfindungsgemäße Vorrichtung zur Sensierung der axialen Stellung des Kolbens bezüglich des Zylindergehäuses montiert ist, die ein kolbenseitiges magnetisches Signalelement und einen zylindergehäuseseitigen magnetflußempfindlichen Sensor mit zugeordnetem Flußleitelement umfaßt,
- Fig. 2: eine Schnittansicht des Geberzylinders gemäß Fig. 1 entsprechend der Schnittverlaufslinie II-II in Fig. 1,
- Fig. 3: eine perspektivische Darstellung des Geberzylinders gemäß Fig. 1,
- Fig. 4: ein in einer Simulation gewonnenes Diagramm zu der Sensorvorrichtung gemäß den Fig. 1 bis 3, in dem die magnetische Flußdichte B [mT] im Flußleitelement über dem Weg s [mm] des magnetischen Signalelements aufgetragen ist, den dieses relativ zum magnetflußempfindlichen Sensor zurücklegen kann, wobei der magnetflußempfindliche Sensor am Meßpunkt 41,5 mm am Flußleitelement angeordnet ist, um den darin vom Magnetfeld des magnetischen Signalelements bewirkten Magnetfluß zu erfassen,
- Fig. 5: eine prinzipielle Darstellung der Sensorvorrichtung gemäß den Fig. 1 bis 3 mit einem Diagramm, in dem über dem vom magnetischen Signalelement relativ zum magnetflußempfindlichen Sensor zurückgelegten Weg s eine vom magnetflußempfindlichen Sensor abgegebene Ausgangsspannung U aufgetragen ist, die der magnetflußempfindliche Sensor aus dem Verlauf der magnetischen Flußdichte B gemäß Fig. 4 gewinnen kann,
- Fig. 6: eine abgebrochene Darstellung des Magnetfelds des magnetischen Signalelements der Sensorvorrichtung gemäß den Fig. 1 bis 5, die veranschaulicht, wie das dem magnetflußempfindlichen Sensor zugeordnete Flußleitelement die Feldlinien des Magnetfelds des magnetischen Signalelements bündelt,
- Fig. 7: eine prinzipielle Darstellung einer Sensorvorrichtung nach einem weiteren Ausführungsbeispiel der Erfindung mit zugehörigem Spannungs-Weg-Verlauf (U = f (s)), wobei die Darstellungsweise der von Fig. 5 entspricht,
- Fig. 8: eine prinzipielle Darstellung einer Variante der Sensorvorrichtung gemäß Fig. 7 mit zugehörigem Spannungs-Weg-Verlauf (U = f (s)), wobei die Darstellungsweise wiederum der von Fig. 5 entspricht, und
- Fig. 9: eine prinzipielle Darstellung einer Sensorvorrichtung nach noch einem weiteren Ausführungsbeispiel , soweit diese Variante der Sensoranordnung mit nur einem Flußleitelement ausgerüstet sein kann, mit zugehörigem Spannungs-Weg-Verlauf (U = f (s)), wobei die Darstellungsweise nochmals der von Fig. 5 entspricht.

### DETAILLIERTE BESCHREIBUNG DER AUSFÜHRUNGSBEISPIELE

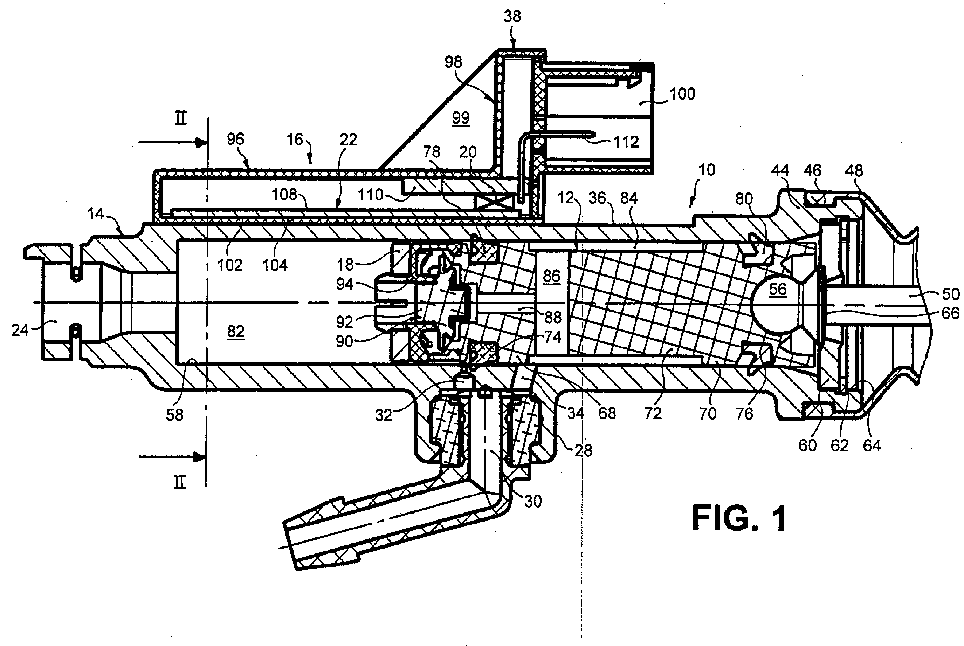

Die Fig. 1 bis 3 zeigen exemplarisch für einen möglichen Anwendungsort der vorliegenden Erfindung einen Geberzylinder 10 für eine hydraulische Kupplungsbetätigung für Kraftfahrzeuge, der einen hier in seiner Grundstellung dargestellten Kolben 12 hat, welcher längsverschieblich in einem Zylindergehäuse 14 aufgenommen ist. Mit 16 ist allgemein eine Sensorvorrichtung zur Sensierung der axialen Stellung des Kolbens 12 bezüglich des Zylindergehäuses 14 beziffert, die ein hier am Kolben 12 angeordnetes magnetisches Signalelement in Form eines ringförmigen Permanentmagneten, kurz Ringmagnet 18, sowie einen hier am Zylindergehäuse 14 angeordneten magnetflußempfindlichen Sensor in Form eines Hallsensors 20 aufweist, mittels dessen die axiale Relativstellung des Ringmagneten 18 zum Hallsensor 20 auf noch zu beschreibende Weise erfaßt werden kann. Wesentlich ist u.a., daß, wie nachfolgend ebenfalls noch näher erläutert werden wird, dem Hallsensor 20 nur ein bezüglich des Hallsensors 20 ortsfestes Flußleitelement 22 zugeordnet ist, welches sich an dem Zylindergehäuse 14 zumindest über den zu erfassenden Bereich von axialen Relativstellungen des Ringmagneten 18 zum Hallsensor 20 erstreckt.

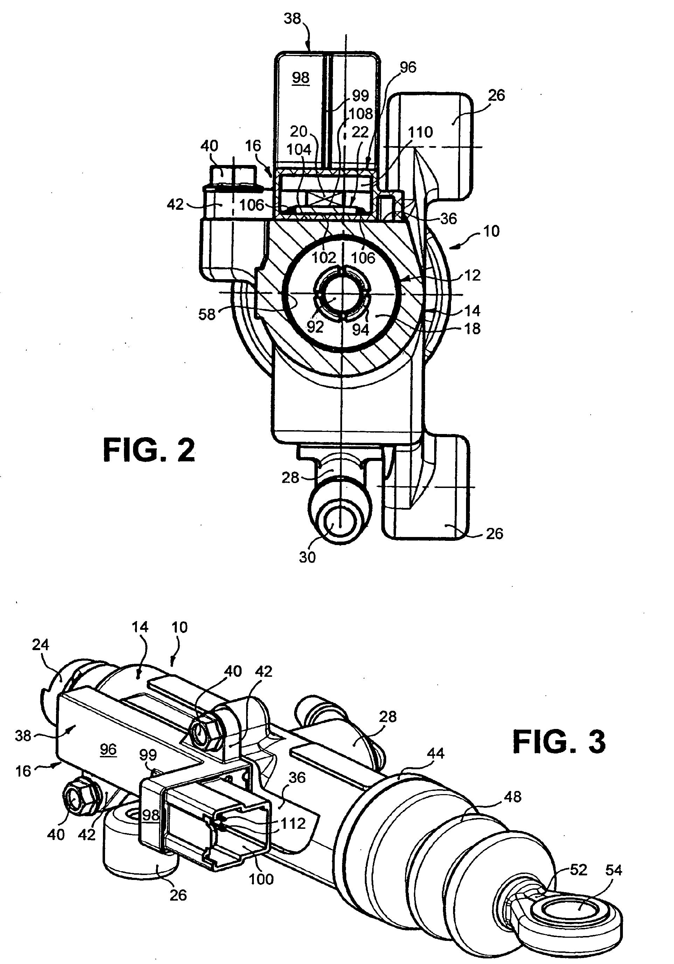

Wie insbesondere die Fig. 1 und 3 zeigen, weist das im dargestellten Ausführungsbeispiel aus einem NE-Metall wie einer Aluminiumlegierung gefertigte Zylindergehäuse 14 an seinem in Fig. 1 linken Ende einen Druckanschluß 24 auf, über den der Geberzylinder 10 mit einem Nehmerzylinder (nicht dargestellt) verbunden werden kann. Das Zylindergehäuse 14 ist ferner, wie den Fig. 2 und 3 zu entnehmen ist, in Längsrichtung im wesentlichen mittig mit zwei auf gegenüberliegenden Seiten ausgebildeten Befestigungsflanschen 26 zur Montage an etwa einem Pedalbock (nicht gezeigt) sowie einem in den Fig. 1 und 2 unten dargestellten Nachlaufanschluß 28 versehen. Über den Nachlaufanschluß 28 kann der Geberzylinder 10 an einen Nachlaufbehälter (nicht dargestellt) angeschlossen werden. Der Nachlaufanschluß 28 hat einen Nachlaufkanal 30, der in einer Druckausgleichsbohrung 32 sowie einer Nachlaufbohrung 34 mündet.

An der in den Fig. 1 und 2 oberen Seite weist das Zylindergehäuse 14 eine ebene Auflagefläche 36 für ein hier aus Kunststoff bestehendes Sensorgehäuse 38 auf, in dem u.a. der Hallsensor 20 und das zugeordnete Flußleitelement 22 untergebracht sind. An der Auflagefläche 36 des Zylindergehäuses 14 liegt das Sensorgehäuse 38 in dem in den Fig. 1 bis 3 gezeigten montierten Zustand der Sensorvorrichtung 16 flächig an. Die Befestigung des Sensorgehäuses 38 an dem Zylindergehäuse 14 erfolgt in dem in den Fig. 1 bis 3 dargestellten Ausführungsbeispiel an vorbestimmter Stelle des Zylindergehäuses 14 mittels Schrauben 40, die in zugeordnete Gewindebohrungen (nicht gezeigt) des Zylindergehäuses 14 eingeschraubt sind und dabei Befestigungsflansche 42 des Sensorgehäuses 38 durch- und hintergreifen. Als Alternative zu dieser Befestigung könnte das Sensorgehäuse 38 auch mittels einer Schnappverbindung mit dem Zylindergehäuse 14 verrastet sein, wie sie in der DE 201 16 818 U1 der Anmelderin näher beschrieben wird, auf die diesbezüglich hiermit ausdrücklich Bezug genommen wird.

An dem in Fig. 1 rechten Ende hat das Zylindergehäuse 14 einen Flanschabschnitt 44 mit einer außenumfangsseitig eingebrachten Radialnut 46, die der Befestigung einer elastomeren Schutzkappe 48 dient. Das in Fig. 3 rechte Ende der faltenbalgartig ausgebildeten Schutzkappe 48 ist an einem Druckbolzen 50 festgelegt, der auf der in Fig. 3 rechten Seite fest mit einem Druckbolzenkopf 52 verbunden ist, welcher ein Anschlußauge 54 zum Anschluß an ein Kupplungspedal (nicht dargestellt) aufweist. Das in Fig. 1 linke Ende des Druckbolzens 50 ist mit einem Kugelkopf 56 versehen, über den der Druckbolzen 50 schwenkbar aber zug- und druckfest mit dem hier aus Kunststoff bestehenden Kolben 12 verbunden ist.

Der in einer zylindrischen Sackbohrung 58 des Zylindergehäuses 14 längsverschieblich aufgenommene Kolben 12 ist mittels einer geschlitzten Anschlagscheibe 60 in dem Zylindergehäuse 14 gesichert, die ihrerseits mittels eines Sicherungsrings 62 an einem Absatz 64 des Zylindergehäuses 14 befestigt ist. Die Anschlagscheibe 60 wirkt mit einem an dem Druckbolzen 50 vorgesehenen Zuganschlag 66 sowie einem ebenfalls am Druckbolzen 50 angebrachten Druckanschlag (nicht dargestellt) zusammen, um den Hub des Kolbens 12 im Zylindergehäuse 14 zu begrenzen.

Der Kolben 12 hat im dargestellten Ausführungsbeispiel zwei im wesentlichen zylindrische Abschnitte 68, 70, die über einen Verbindungsabschnitt 72 miteinander verbunden sind. Jeder der zylindrischen Abschnitte 68, 70 ist außenumfangsseitig mit einer Radialnut 74, 76 versehen, von denen die in Fig. 1 linke Radialnut 74 der Aufnahme eines Primärdichtelements 78 in der Form eines elastomeren Nutrings dient, während in der in Fig. 1 rechten Radialnut 76 ein Sekundärdichtelement 80 - ebenfalls in der Form eines elastomeren Nutrings - aufgenommen ist. In Fig. 1 sind die Dichtelemente 78 bzw. 80 zur Vereinfachung der Darstellung im unverformten Zustand gezeigt. Das Primärdichtelement 78 begrenzt in an sich bekannter Weise einen mit dem Druckanschluß 24 kommunizierenden Druckraum 82 im Zylindergehäuse 14, während ein zwischen dem Außenumfang des Kolbens 12 und der Wandung der Sackbohrung 58 vorgesehener Nachlaufraum 84 in an sich bekannter Weise von dem Primärdichtelement 78 in Fig. 1 nach links und dem Sekundärdichtelement 80 in Fig. 1 nach rechts begrenzt wird.

Der Verbindungsabschnitt 72 des Kolbens 12 ist schließlich angrenzend an den zylindrischen Abschnitt 68 mit einer Querbohrung 86 versehen, in der eine sich durch den zylindrischen Abschnitt 68 hindurch erstreckende Längsbohrung 88 mündet. Auf der in Fig. 1 linken Seite der Längsbohrung 88 schließt sich ein an sich bekanntes zentrales Nachsaugventil 90 an, dessen elastomerer Ventilkörper 92 mittels einer an der druckraumseitigen Stirnfläche des Kolbens 12 angebrachten, ebenfalls aus Kunststoff bestehenden Haltekappe 94 in axialer Richtung bewegbar am Kolben 12 gehalten ist. Die Haltekappe 94 dient zugleich der spielfreien Befestigung des Ringmagneten 18 am Kolben 12, wie es in der DE 202 08 568 U1 der Anmelderin ausführlich beschrieben wird, auf die hiermit bezüglich der Ausbildung und der Funktion der Haltekappe 94 sowie des zentralen Nachsaugventils 90 ausdrücklich Bezug genommen wird.

In dem in der hydraulischen Kupplungsbetätigung montierten, befüllten Zustand des Geberzylinders 10 kommuniziert der Druckraum 82 in der in Fig. 1 dargestellten Grundstellung des Kolbens 12 über die Druckausgleichsbohrung 32 und den Nachlaufkanal 30 mit dem Nachlaufbehälter (nicht dargestellt) sowie über das Nachsaugventil 90, die Längsbohrung 88 und die Querbohrung 86 mit dem Nachlaufraum 84. Der Nachlaufraum 84 selbst ist über die Nachlaufbohrung 34 und den Nachlaufkanal 30 mit dem Nachlaufbehälter verbunden. Wird nun der Kolben 12 über das an dem Druckbolzenkopf 52 angelenkte Kupplungspedal (nicht gezeigt) in das Zylindergehäuse 14 hinein, d.h. in Fig. 1 nach links verschoben, so überfährt das Primärdichtelement 78 die Druckausgleichsbohrung 32 und unterbricht somit die hydraulische Verbindung zwischen dem Druckraum 82 und dem Nachlaufbehälter. Durch den sich im Druckraum 82 aufbauenden Druck wird der Ventilkörper 92 des Nachsaugventils 90 gegen den Kolben 12 gedrückt und verhindert somit ein Abströmen der Hydraulikflüssigkeit über die Längsbohrung 88 und die Querbohrung 86 in den Nachlaufraum 84, der nun über die Nachlaufbohrung 34 und die Druckausgleichsbohrung 32 mit dem Nachlaufbehälter verbunden ist. Der sich im Druckraum 82 einstellende Druck wird über den Druckanschluß 24 und die Flüssigkeitssäule zwischen dem Geberzylinder 10 und dem am Druckanschluß 24 angeschlossenen Nehmerzylinder (nicht dargestellt) übertragen, um an der mit dem Nehmerzylinder wirkverbundenen Trockenreibkupplung (nicht gezeigt) eine Ausrückkraft aufzubringen. Die axiale Bewegung des Kolbens 12 ist hierbei durch Sensierung des über die Haltekappe 94 am Kolben 12 befestigten Ringmagneten 18 mittels der am Zylindergehäuse 14 fest angebrachten, den Hallsensor 20 und das zugeordnete Flußleitelement 22 umfassenden Sensoranordnung durch die Wandung des Zylindergehäuses 14 hindurch erfaßbar, wie nachfolgend noch näher beschrieben werden wird.

Wird die Kupplung gelöst, so wird durch die Rückstellkraft der Kupplung die Flüssigkeitssäule in den Geberzylinder 10 zurückverschoben. Eilt, wie es z.B. durch eine Rückholfeder (nicht dargestellt) am Kupplungspedal verursacht werden kann, der dann über den Druckbolzen 50 gezogene Kolben 12 des Geberzylinders 10 dieser Rückströmbewegung vor, entsteht im Druckraum 82 des Geberzylinders 10 und im Leitungssystem zum Nehmerzylinder ein Unterdruck. Infolge der Druckdifferenz, die dann zwischen den beiden Seiten des Ventilkörpers 92 des Nachsaugventils 90 herrscht, hebt der axial verschiebbare Ventilkörper 92 vom Kolben 12 ab und öffnet die Längsbohrung 88 im Kolben 12. In den Druckraum 82 strömt sodann Hydraulikflüssigkeit vom Nachlaufraum 84 über die Querbohrung 86 und die Längsbohrung 88 im Kolben 12. Sobald die Druckdifferenz zwischen den beiden Seiten des Ventilkörpers 92 ausgeglichen ist, strömt die überflüssige Menge der so eingeströmten Hydraulikflüssigkeit durch die inzwischen wieder offene, d.h. vom Primärdichtelement 78 in Fig. 1 nach rechts überfahrene Druckausgleichsbohrung 32 in den Ausgleichsbehälter zurück.

Weitere Einzelheiten der den Hallsensor 20 und das zugeordnete Flußleitelement 22 umfassenden Sensoranordnung der Sensorvorrichtung 16 sind insbesondere den Fig. 1 und 2 zu entnehmen.

Demgemäß hat das Sensorgehäuse 38 einen im wesentlichen L-förmigen Querschnitt, mit einem im wesentlichen quaderförmigen Grundabschnitt 96 und einem sich an den Grundabschnitt 96 anschließenden Verbindungsabschnitt 98. Der Grundabschnitt 96 des Sensorgehäuses 38 liegt flächig an der Auflagefläche 36 des Zylindergehäuses 14 an und dient der geschützten Aufnahme des Hallsensors 20 samt zugeordnetem Flußleitelement 22. Der gegenüber dem Grundabschnitt 96 mittels einer Rippe 99 abgestützte Verbindungsabschnitt 98 des Sensorgehäuses 38 weist eine an sich bekannte Steckerfassung 100 auf, in der ein Stecker (nicht dargestellt) vermittels einer Schnappverbindung befestigt werden kann, um die Sensoranordnung mit Strom zu versorgen und Sensorsignale von der Sensoranordnung abzuleiten.

Wie die Fig. 1 und 2 ferner zeigen, handelt es sich im dargestellten Ausführungsbeispiel bei dem Flußleitelement 22 um einen ebenen und in einer Draufsicht gesehen rechteckigen Blechabschnitt aus einem geeignet magnetisierbaren Material, wie ein ferromagnetischer Dynamoblechabschnitt. Das Flußleitelement 22 liegt mit seiner in den Fig. 1 und 2 unteren Längsfläche 102 flächig an einer Bodenwand 104 des Grundabschnitts 96 des Sensorgehäuses 38 an und ist an dieser auf geeignete Weise - im dargestellten Ausführungsbeispiel mittels einer Klebeverbindung (Klebstoffraupen 106 in Fig. 2) - befestigt. Hierbei ist die Anordnung so getroffen, daß sich das Flußleitelement 22 im wesentlichen in Richtung der axialen Relativbewegung des Kolbens 12 bezüglich des Zylindergehäuses 14 erstreckt oder, mit anderen Worten gesagt, im wesentlichen in Richtung der Mittelachse der Sackbohrung 58 im Zylindergehäuse 14 und parallel zu dieser liegt.

Der Hallsensor 20 liegt an dem ihm zugeordneten Flußleitelement 22 an. Genauer gesagt liegt der Hallsensor 20 bei dem hier dargestellten Ausführungsbeispiel an dem in Fig. 1 rechten Längsende des Flußleitelements 22 auf der in den Fig. 1 und 2 oberen Längsfläche 108 des Flußleitelements 22 auf, und zwar etwas außerhalb des zu erfassenden Bereichs von axialen Relativstellungen des Ringmagneten 18 zum Hallsensor 20. Hier sei in Erinnerung gerufen, daß der Kolben 12 in der in Fig. 1 gezeigten Grundstellung schon seine in Fig. 1 am weitesten rechts liegende Stellung eingenommen hat. Zweckmäßig ist der Hallsensor 20 in Richtung des Flußleitelements 22 oder quer dazu ausgerichtet. Da der Aufbau und die Funktion von Hallsensoren allgemein bekannt sind und in der Beschreibungseinleitung, soweit für das Verständnis der vorliegenden Erfindung notwendig, bereits beschrieben wurden, sind weitere Ausführungen hierzu an dieser Stelle entbehrlich.

In den Fig. 1 und 2 ist oberhalb des Hallsensors 20 eine damit elektrisch verbundene, ebenfalls im Sensorgehäuse 38 aufgenommene Auswerteelektronik 110 schematisch angedeutet, welche dazu dient, zum einen den Hallsensor 20 mit Strom zu versorgen und zum anderen die vom Hallsensor 20 abgegebenen, für den magnetischen Fluß B im Flußleitelement 22 und somit die axiale Stellung des Kolbens 12 bezüglich des Zylindergehäuses 14 repräsentativen Signale aufzubereiten. An der Auswerteelektronik 110 sind schließlich Steckerzungen 112 angeschlossen, die sich in die Steckerfassung 100 am Verbindungsabschnitt 98 des Sensorgehäuses 38 hinein erstrecken, um eine Stromzufuhr von außen sowie eine Signalabgabe nach außen zu ermöglichen.

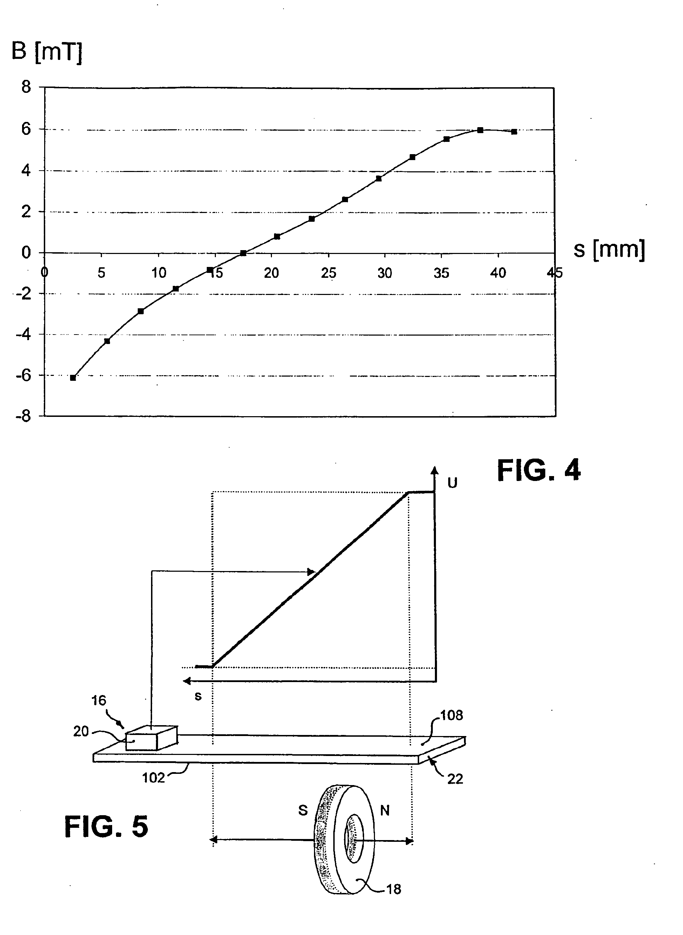

In Fig. 4 ist für die unter Bezugnahme auf die Fig. 1 bis 3 beschriebene Sensorvorrichtung 16 der Verlauf der magnetischen Flußdichte B im Flußleitelement 22 in mT (Milli-Tesla) über dem Weg s des Kolbens 12 bzw. des daran angebrachten Ringmagneten 18 in mm aufgetragen, die mittels des Hallsensors 20 erfaßt werden kann, wenn dieser an einem Meßpunkt bei 41,5 mm am Flußleitelement 22 angeordnet ist. Es ist ersichtlich, daß die mittels des Hallsensors 20 erfaßte magnetische Flußdichte B stetig steigt um so näher der Ringmagnet 18 dem Hallsensor 20 kommt und stetig fällt um so weiter sich der Ringmagnet 18 vom Hallsensor 20 entfernt. Zwar hat die Kennlinie der magnetischen Flußdichte B über dem Weg s keinen exakt linearen Verlauf. Der Verlauf der magnetischen Flußdichte B über dem Weg s kann jedoch leicht vermittels der Auswerteelektronik 110 linearisiert werden, so daß die Sensorvorrichtung 16 eine vom Weg s des Kolbens 12 bzw. des daran befestigten Ringmagneten 18 linear abhängige Signalspannung U abzugeben vermag, wie sie in Fig. 5 gezeigt ist. Die Fig. 5 veranschaulicht im übrigen auch die Magnetisierungsrichtung des Ringmagneten 18, mit dem Südpol S auf der einen Stirnseite und dem Nordpol N auf der anderen Stirnseite des Ringmagneten 18.

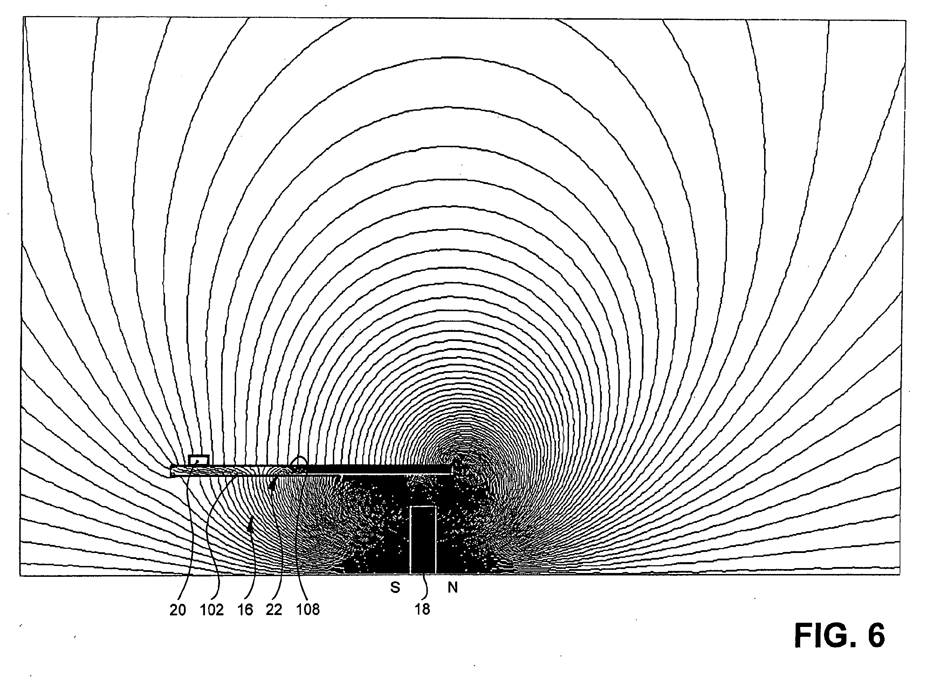

In Fig. 6 ist schließlich für die unter Bezugnahme auf die Fig. 1 bis 5 beschriebene Sensorvorrichtung 16 das Magnetfeld des Ringmagneten 18 für eine bestimmte Relativstellung des Ringmagneten 18 zum Hallsensor 20 dargestellt. Es ist deutlich zu erkennen, daß es quasi zu einer Bündelung der über die untere Längsfläche 102 und die obere Längsfläche 108 in das Flußleitelement 22 eintretenden Feldlinien des Magnetfelds des Ringmagneten 18 im Flußleitelement 22 kommt, so daß sich im Verhältnis hohe Feldstärken H im Flußleitelement 22 ergeben. Der somit im Flußleitelement 22 konzentrierte magnetische Fluß kann im Ergebnis leicht mittels des am Flußleitelement 22 angeordneten Hallsensors 20 erfaßt werden.

Obgleich in dem obigen Ausführungsbeispiel der Einsatz der Sensorvorrichtung 16 exemplarisch an einer Kolben-Zylinder-Anordnung mit einem "klassischen" Kolben 12 beschrieben wurde, der zwei mit einer gehäuseseitigen Lauffläche zusammenwirkende Dichtelemente 78, 80 aufweist, ist für den Fachmann ersichtlich, daß die Sensorvorrichtung 16 natürlich auch bei einem sogenannten "Schaftkolben" eingesetzt werden kann, bei dem ein gehäusefestes (Sekundär)Dichtelement mit einer am Kolbenschaft vorgesehenen Lauffläche zusammenwirkt, während ein am Kolbenkopf angebrachtes (Primär)Dichtelement mit einer gehäuseseitigen Lauffläche zusammenwirkt. Hierbei könnte der Ringmagnet 18 ebenfalls mit einer Haltekappe am Kolbenkopf befestigt werden.

Ebenso ist ein Einsatz der Sensorvorrichtung 16 bei einem sogenannten "Plungerkolben" möglich, bei dem zwei oder mehr gehäusefeste Dichtelemente (nicht dargestellt) mit einer kolbenseitig vorgesehenen Lauffläche (nicht dargestellt) zusammenwirken, wie es etwa in der DE 100 28 673 A1 der Anmelderin beschrieben wird. Hierbei ist an dem Zylindergehäuse gemäß der DE 100 28 673 A1 zusätzlich eine Aufnahme für das Sensorgehäuse 38 vorzusehen, die z.B. wie in der DE 201 16 818 U1 der Anmelderin offenbart ausgebildet sein kann. Was bei der "Plungerkolben"-Ausführung die Befestigung des Ringmagneten 18 am Kolben angeht, kann wiederum beispielhaft auf die DE 202 08 568 U1 der Anmelderin (siehe dort die Fig. 10 bis 14) verwiesen werden, auf die diesbezüglich hiermit ausdrücklich Bezug genommen wird.

Obgleich bei dem unter Bezugnahme auf die Fig. 1 bis 6 beschriebenen Ausführungsbeispiel die Auswerteelektronik 110 als vom Hallsensor 20 separates Teil beschrieben wurde, kann die Auswerteelektronik - wie eingangs schon angesprochen - auch bereits im Hallsensor integriert sein. In diesem Fall wird lediglich eine Platine zur Befestigung des Hallsensors und zur Stromzufuhr sowie Signalableitung zum/vom Hallsensor benötigt.

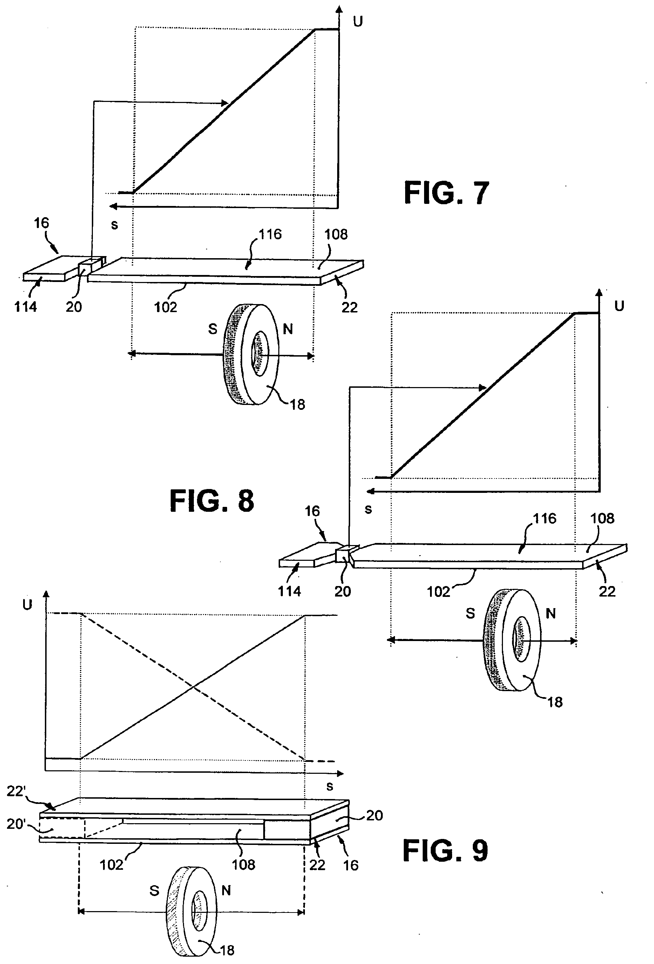

Die Fig. 7 bis 9 zeigen weitere Ausführungsbeispiele der Sensorvorrichtung 16, die nachfolgend nur insofern beschrieben werden sollen, als sie sich vom unter Bezugnahme auf die Fig. 1 bis 6 beschriebenen Ausführungsbeispiel unterscheiden, wobei gleiche oder entsprechende Teile mit den gleichen Bezugszeichen versehen sind. Hinsichtlich des Wirkprinzips unterscheiden sich diese Ausführungsbeispiele nicht vom Ausführungsbeispiel gemäß den Fig. 1 bis 6.

Gemäß Fig. 7 ist das Flußleitelement 22 in Längsrichtung in zwei Abschnitte 114, 116 unterteilt, zwischen denen der Hallsensor 20 eingefügt ist. Hierdurch liegt der Hallsensor 20 direkt in dem im Flußleitelement 22 konzentrierten magnetischen Fluß, was die Signalstärke des vom Hallsensor 20 abgegebenen Signals gegenüber dem Ausführungsbeispiel gemäß den Fig. 1 bis 6 erhöht. In einer in Fig. 8 dargestellten Variante dieses Ausführungsbeispiels verjüngen sich die Abschnitte 114, 116 des Flußleitelements 22 jeweils zum Hallsensor 20 hin bzw. sind zum Hallsensor 20 hin abgeschrägt.

Bei dem Ausführungsbeispiel gemäß Fig. 9 sind zwei Flußleitelemente 22, 22' vorgesehen (so nicht gemäß der Erfindung), die im wesentlichen parallel zueinander verlaufen und zwischen denen der Hallsensor 20 eingefügt ist. Das mit dieser Sensoranordnung vom Hallsensor 20 erfaßte, für die magnetische Flußdichte B und somit die Relativstellung des Ringmagneten 18 zum Hallsensor 20 repräsentative Signal weist über dem Weg s aufgetragen einen Verlauf auf, der wesentlich linearer ist als der in Fig. 4 dargestellte Verlauf. Das Signal hat im Vergleich zu einer Sensoranordnung mit nur einem Flußleitelement 22 aber eine geringere Signalstärke.

In Fig. 9 mit gestrichelten Linien dargestellt ist schließlich eine Variante der Sensoranordnung, bei der zum Erhalt einer Redundanz der Sensorsignale zwei Hallsensoren 20, 20' vorgesehen sind, von denen der eine Hallsensor 20 an einem Längsende des Flußleitelements 22 angeordnet ist, während der andere Hallsensor 20' an dem anderen Längsende des Flußleitelements 22 angeordnet ist. Diese Variante der Sensoranordnung kann gemäß der Erfindung auch mit nur einem Flußleitelement 22 ausgerüstet sein.

Obgleich bei den oben beschriebenen Ausführungsbeispielen das Flußleitelement 22 jeweils materialeinheitlich bzw. ggf. einstückig aus einem Material ausgebildet ist, kann als Flußleitelement den jeweiligen Erfordernissen entsprechend auch ein Laminat aus ggf. verschiedenen Materialien zum Einsatz kommen.

### BEZUGSZEICHENLISTE

- 10: Geberzylinder
- 12: Kolben
- 14: Zylindergehäuse
- 16: Sensorvorrichtung
- 18: Ringmagnet
- 20, 20': Hallsensor
- 22, 22': Flußleitelement
- 24: Druckanschluß
- 26: Befestigungsflansch
- 28: Nachlaufanschluß
- 30: Nachlaufkanal
- 32: Druckausgleichsbohrung
- 34: Nachlaufbohrung
- 36: Auflagefläche
- 38: Sensorgehäuse
- 40: Schraube
- 42: Befestigungsflansch
- 44: Flanschabschnitt
- 46: Radialnut
- 48: Schutzkappe
- 50: Druckbolzen
- 52: Druckbolzenkopf
- 54: Anschlußauge
- 56: Kugelkopf
- 58: Sackbohrung
- 60: Anschlagscheibe
- 62: Sicherungsring
- 64: Absatz
- 66: Zuganschlag
- 68: zylindrischer Abschnitt
- 70: zylindrischer Abschnitt
- 72: Verbindungsabschnitt
- 74: Radialnut
- 76: Radialnut
- 78: Primärdichtelement
- 80: Sekundärdichtelement
- 82: Druckraum
- 84: Nachlaufraum
- 86: Querbohrung
- 88: Längsbohrung
- 90: Nachsaugventil
- 92: Ventilkörper
- 94: Haltekappe
- 96: Grundabschnitt
- 98: Verbindungsabschnitt
- 99: Rippe
- 100: Steckerfassung
- 102: untere Längsfläche
- 104: Bodenwand
- 106: Klebstoffraupe
- 108: obere Längsfläche
- 110: Auswerteelektronik
- 112: Steckerzunge
- 114: Abschnitt
- 116: Abschnitt

## Patentansprüche

1. Vorrichtung (16) , die dazu angelegt ist, die axiale Stellung eines von zwei relativ zueinander bewegbaren Bauteilen bezüglich des anderen Bauteils zu sensieren, insbesondere eines Kolbens (12) bezüglich eines Zylindergehäuses (14) eines Geber- oder Nehmerzylinders (10) für eine hydraulische Kupplungsbetätigung für Kraftfahrzeuge, mit
einem an dem einen Bauteil angeordneten magnetischen Signalelement, bei dem es sich um einen Permanentmagneten, nämlich einen Ringmagneten (18) handelt, der in axialer Richtung magnetisiert ist, und
mindestens einem an dem anderen Bauteil angeordneten magnetflussempfindlichen Sensor (20), mittels dessen die axiale Relativstellung des Ringmagneten (18) zum Sensor (20) erfassbar ist,
wobei dem Sensor (20) nur ein bezüglich des Sensors (20) ortsfestes Flussleitelement (22) zugeordnet ist, welches sich mindestens über den zu erfassenden Bereich von axialen Relativstellungen des Ringmagneten (18) zum Sensor (20) erstreckt und aus einem Blechabschnitt aus einem geeignet magnetisierbaren Material, wie einem Dynamoblechabschnitt besteht,
wobei der Sensor (20) an einem der Längsenden des Flussleitelements (22) außerhalb des zu erfassenden Bereichs von axialen Relativstellungen des Ringmagneten (18) zum Sensor (20) angeordnet ist, so dass die mittels des Sensors (20) erfasste magnetische Flussdichte stetig steigt um so näher der Ringmagnet (18) dem Sensor (20) kommt und stetig fällt um so weiter sich der Ringmagnet (18) vom Sensor (20) entfernt, und
wobei der Sensor (20) auf einer Längsfläche (108) des Flussleitelements (22) aufliegt oder das Flussleitelement (22) in Längsrichtung in zwei Abschnitte (114, 116) unterteilt ist, zwischen denen der Sensor (20) am Flussleitelement (22) anliegend eingefügt ist.

2. Vorrichtung (16) nach Anspruch 1, wobei es sich bei dem magnetflussempfindlichen Sensor um einen Hallsensor (20) handelt.

3. Vorrichtung (16) nach Anspruch 1 oder 2, wobei sich das Flussleitelement (22) im Wesentlichen in Richtung der axialen Relativbewegung des einen Bauteils bezüglich des anderen Bauteils erstreckt.

4. Vorrichtung (16) nach einem der vorhergehenden Ansprüche, wobei sich die Abschnitte (114, 116) des Flussleitelements (22) jeweils zum magnetflussempfindlichen Sensor (20) hin verjüngen.

5. Vorrichtung (16) nach einem der vorhergehenden Ansprüche, wobei der Ringmagnet (18) an einem Kolben (12) eines Geber- oder Nehmerzylinders (10) für eine hydraulische Kupplungsbetätigung für Kraftfahrzeuge angebracht ist, während der magnetflussempfindliche Sensor (20) mit dem zugeordneten Flussleitelement (22) an einem Zylindergehäuse (14) des Geber- oder Nehmerzylinders (10) angebracht ist.

6. Vorrichtung (16) nach Anspruch 5, wobei der magnetflussempfindliche Sensor (20) und das zugeordnete Flussleitelement (22) in einem Sensorgehäuse (38) untergebracht sind, welches an vorbestimmter Stelle an dem Zylindergehäuse (14) des Geber- oder Nehmerzylinders (10) befestigt ist.

## Claims

1. Device (16) which is provided to sense the axial position, in relation to the other component, of one of two components mobile relative to each other, in particular a piston (12) in relation to a cylinder housing (14) of a master or slave cylinder (10) for a hydraulic clutch control for motor vehicles, comprising
a magnetic signal element arranged on the one component, which is a permanent magnet, namely a ring magnet (18) that is axially magnetized, and
at least one magnetic-flux-sensitive sensor (20) arranged on the other component, by means of which the axial relative position of the ring magnet (18) to the sensor (20) can be detected,
wherein allocated to the sensor (20) is one flux guide element (22) only which is stationary in relation to the sensor (20), which extends at least over the area to be detected of axial relative positions of the ring magnet (18) to the sensor (20), and which comprises a plate section of a suitable magnetizable material, such as a dynamo core sheet section,
wherein the sensor (20) is arranged at one of the longitudinal ends of the flux guide element (22) outside the area to be detected of axial relative positions of the ring magnet (18) to the sensor (20), so that the magnetic flux density detected by means of the sensor (20) increases steadily the closer the ring magnet (18) comes to the sensor (20), and falls steadily the further the ring magnet (18) moves away from the sensor (20), and
wherein the sensor (20) lies on one longitudinal face (108) of the flux guide element (22), or the flux guide element (22) in the longitudinal direction is divided into two sections (114, 116) between which the sensor (20) is inserted to abut against the flux guide element (22).

2. Device (16) according to claim 1, wherein the magnetic-flux-sensitive sensor is a Hall sensor (20).

3. Device (16) according to claim 1 or 2, wherein the flux guide element (22) extends essentially in the direction of the axial relative movement of the one component in relation to the other component.

4. Device (16) according to one of the preceding claims, wherein the sections (114, 116) of the flux guide element (22) each taper towards the magnetic-flux-sensitive sensor (20).

5. Device (16) according to one of the preceding claims, wherein the ring magnet (18) is attached to a piston (12) of a master or slave cylinder (10) for a hydraulic clutch control for motor vehicles, while the magnetic-flux-sensitive sensor (20) with the allocated flux guide element (22) is attached to a cylinder housing (14) of the master or slave cylinder (10).

6. Device (16) according to claim 5, wherein the magnetic-flux-sensitive sensor (20) and the allocated flux guide element (22) are accommodated in a sensor housing (38) which is mounted at a predetermined point on the cylinder housing (14) of the master or slave cylinder (10).

## Revendications

1. Dispositif (16), qui est conçu pour détecter la position axiale de l'une de deux pièces mobiles relativement l'une par rapport à l'autre, par rapport à l'autre des pièces, notamment d'un piston (12) par rapport à un carter de cylindre (14) d'un maître-cylindre ou d'un cylindre récepteur (10) pour un système d'actionnement hydraulique d'embrayage de véhicules automobiles, comprenant
un élément de signal magnétique, agencé sur l'une des pièces et concernant lequel il s'agit d'un aimant permanent, à savoir un aimant annulaire (18), qui est magnétisé dans la direction axiale, et
au moins un détecteur (20) sensible au flux magnétique, agencé sur l'autre pièce, et au moyen duquel il est possible de relever la position axiale relative de l'aimant annulaire (18) par rapport au détecteur (20),
dispositif
dans lequel au détecteur (20) n'est associé qu'un élément de conduction de flux (22), en position fixe par rapport au détecteur (20), et qui s'étend au moins sur la zone de positions axiales relatives de l'aimant annulaire (18) par rapport au détecteur (20), à détecter, et qui est constitué d'un tronçon de tôle en un matériau pouvant être magnétisé de manière appropriée, comme un tronçon de tôle de dynamo,
dans lequel le détecteur (20) est agencé à l'une des extrémités longitudinales de l'élément de conduction de flux (22), à l'extérieur de la zone de positions axiales relatives de l'aimant annulaire (18) par rapport au détecteur (20), à détecter, de sorte que la densité de flux magnétique relevée au moyen du détecteur (20) croît de manière continue d'autant plus que l'aimant annulaire (18) se rapproche du détecteur (20), et décroît de manière continue d'autant plus que l'aimant annulaire (18) s'éloigne du détecteur (20), et
dans lequel le détecteur (20) repose sur une surface longitudinale (108) de l'élément de conduction de flux (22), ou bien l'élément de conduction de flux (22) est subdivisé, en direction longitudinale, en deux tronçons (114, 116) entre lesquels est inséré le détecteur (20) en s'appuyant contre l'élément de conduction de flux (22).

2. Dispositif (16) selon la revendication 1, dans lequel concernant le détecteur sensible au flux magnétique, il s'agit d'un détecteur de Hall (20).

3. Dispositif (16) selon la revendication 1 ou la revendication 2, dans lequel l'élément de conduction de flux (22) s'étend sensiblement dans la direction du mouvement axial relatif d'une des pièces par rapport à l'autre pièce.

4. Dispositif (16) selon l'une des revendications précédentes, dans lequel les tronçons (114, 116) de l'élément de conduction de flux (22) se rétrécissent chacun respectivement en direction du détecteur (20) sensible au flux magnétique.

5. Dispositif (16) selon l'une des revendications précédentes, dans lequel l'aimant annulaire (18) est placé sur un piston (12) d'un maître-cylindre ou d'un cylindre récepteur (10) pour un système d'actionnement hydraulique d'embrayage de véhicules automobiles, tandis que le détecteur (20) sensible au flux magnétique avec l'élément de conduction de flux (22) associé, est placé sur un carter de cylindre (14) du maître-cylindre ou cylindre récepteur (10).

6. Dispositif (16) selon la revendication 5, dans lequel le détecteur (20) sensible au flux magnétique et l'élément de conduction de flux (22) associé, sont logés dans un boitier de détecteur (38), qui est fixé en un endroit prédéterminé sur le carter de cylindre (14) du maître-cylindre ou cylindre récepteur (10).
